# DEMANDE DE BREVET EUROPEEN

(11) **EP 2 077 397 A2**
(43) Date de publication de la demande: **08.07.2009**
(21) Numéro de dépôt: 08380130.8
(22) Date de dépôt: 30.04.2008
(51) Int. Cl.: F16B 19/10

(54) **Rivet élastique universel**

(30) Priorité: 04.01.2008 ES 200800007 P
(71) Demandeur: Elduayen Madariaga, Juan Andrés, 20150 Aduna (Gipuzkoa) (ES); Sanchez Garduño, Javier, 20150 Aduna (Gipuzkoa) (ES)
(72) Inventeur: Elduayen Madariaga, Juan Andrés, 20150 Aduna (Gipuzkoa) (ES); Sanchez Garduño, Javier, 20150 Aduna (Gipuzkoa) (ES)
(74) Mandataire: Urizar Barandiaran, Miguel Angel

(57) **Abrégé**

Rivet élastique universel, qui est constitué d'un corps élastique (1), d'une tige (2) et d'une rondelle (3) montés coaxialement, ce corps élastique (1) étant disposé entre une tête (21) de la tige (2) et la rondelle (3) elle-même.

Ce corps élastique (1) comporte un bossage périmétral extérieur (11) qui, lors du rivetage, demeure disposé entre les composants (C), (C2) à river, en évitant la transmission de vibrations et de bruits entre eux.

## Description

Dans l'état actuel de la technique, on connaît déjà différents types de rivets permettant de fixer entre eux une pluralité d'éléments et l'on peut citer, par exemple et entre autres, les documents ES2228503, ES2247173, ES2268139 et ES2267470 (dans une technologie récente) et les documents ES0290910 et ES273562 (dans une technologie plus ancienne).

Les types de rivets connus servent assembler les différents matériaux d'une manière rapide et simple, mais n'arrivent pas à éviter la transmission de bruits, de vibrations et de mouvements entre eux, et il ne sont pas adaptés non plus pour supporter les contractions et les dilatations de différents types de matériaux.

L'objet de l'invention est un rivet élastique universel ayant une structure nouvelle constituée d'un corps élastique, d'une tige et d'une rondelle montés coaxialement, ce corps élastique étant disposé entre la tête de la tige et la rondelle.

Ce corps élastique comporte un bossage périmétral extérieur qui, lors du rivetage, demeure disposé entre les composants à river, en évitant ainsi la transmission de vibrations et de bruits entre eux, ce qui résout la problématique exposée ci-dessus, en se basant sur une solution simple et d'une grande efficacité.

Pour mieux comprendre l'objet de la présente invention, on représente sur les plans une forme préférentielle de réalisation pratique, susceptible de changements accessoires qui n'en dénaturent pas le fondement.
La figure 1 représente une vue générale d'un rivet élastique universel, selon l'invention, sur laquelle on peut en observer les composants, la structure et les particularités.

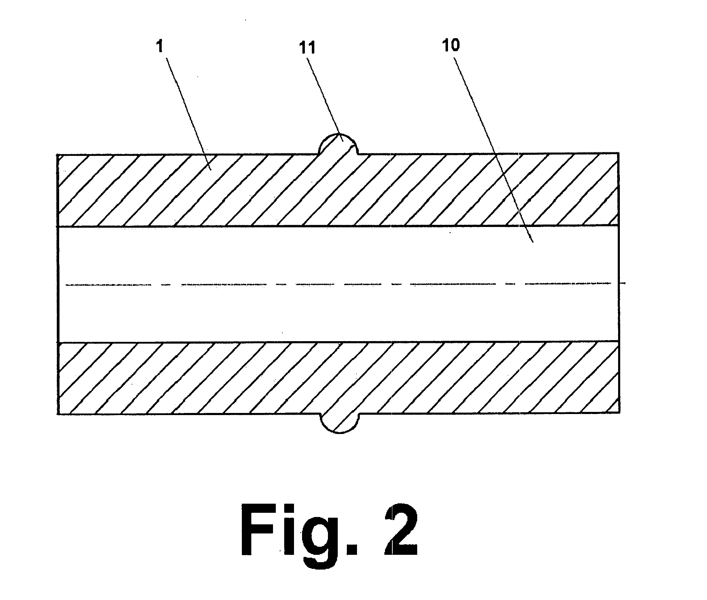

La figure 2 représente une section générale exclusivement du corps élastique (1), selon l'indication A:A de la figure antérieure.
Les figures 3a à 3d représentent, de façon schématique, différentes phases d'un assemblage élastique conformément à l'invention :

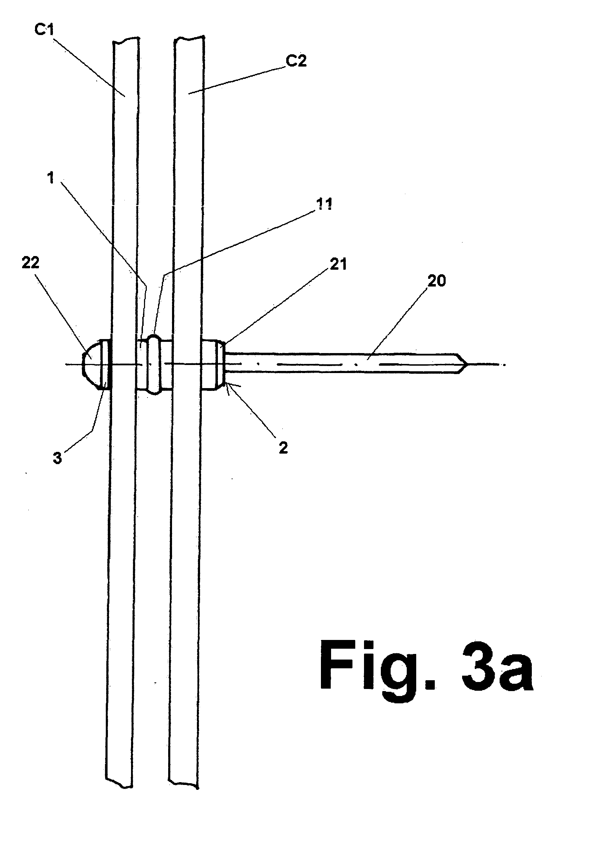

   - Figures 3a : introduction du rivet élastique qui fait l'objet de l'invention dans les trous de foret des deux composants (Ci), (C₂) à assembler.

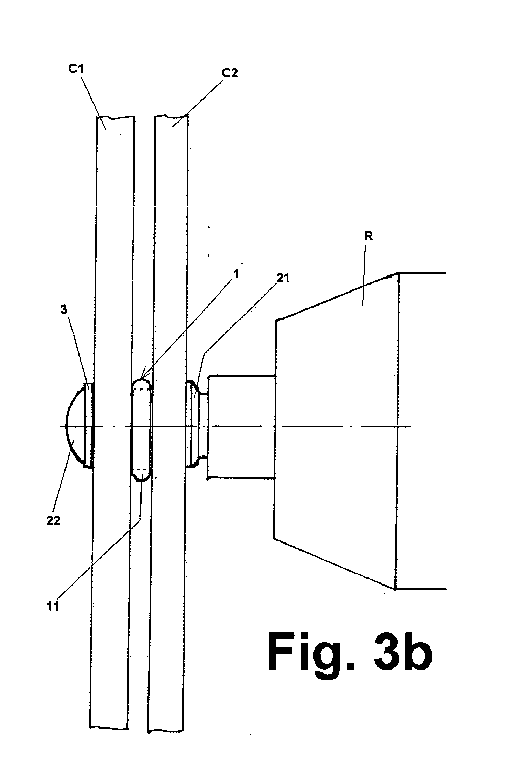

   - Figures 3b : début de la déformation du corps élastique (1), à la suite de la traction du corps de la tige, par exemple avec une riveteuse (R).

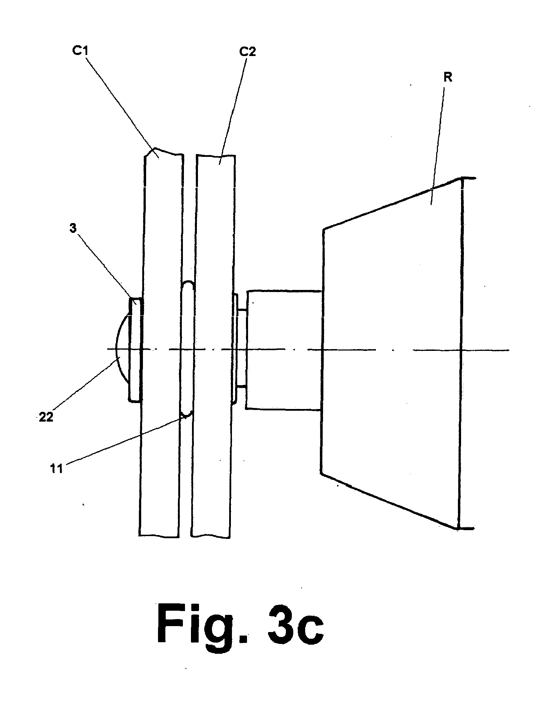

   - Figure 3c : contraction et fixation élastiques des composants (Ci), (C₂).

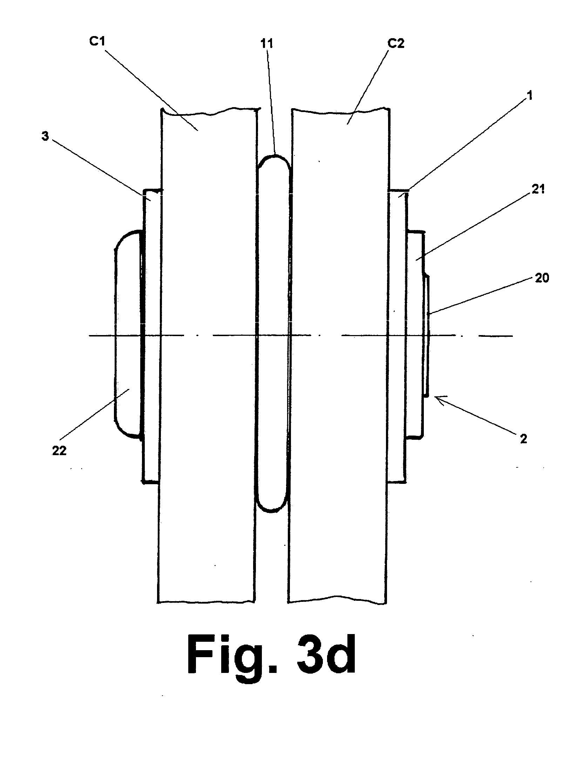

   - Figure 3d : rupture du corps (20) de la tige (2) et assemblage élastique achevé.

On décrit ci-dessous un exemple de réalisation pratique, non limitative, de la présente invention.

L'objet de l'invention est un rivet élastique universel, constitué par un corps élastique (1), une tige (2) et une rondelle (3).

Conformément à l'invention et selon la représentation représentée :
- le corps élastique (1) comporte un orifice (10) axial et comporte un bossage périmétral extérieur (11). Il s'agit de préférence d'un corps de révolution ;
- la tige (2) a une configuration oblongue et comporte à ses extrémités les têtes (21), (22), entre lesquelles est piacé le corps élastique (1), ces têtes venant se loger dans l'orifice axial (10) de ce corps élastique (1), au-delà duquel se prolonge son corps oblong (20) ;
- la rondelle (3) est disposée entre la tête (22) de la tige (2) et l'une des bases du corps élastique (1).

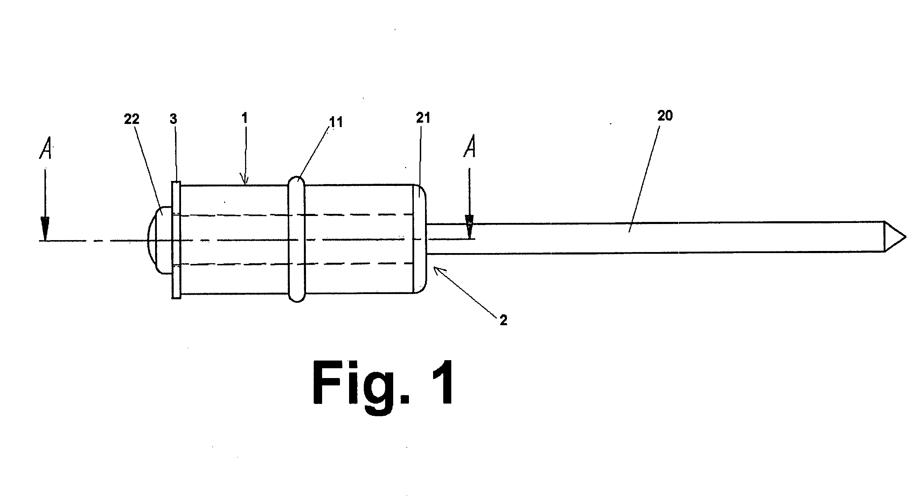

Dans l'exemple de réalisation représenté sur la figure 1, plus concrètement, le rivet élastique de l'invention présente la particularité de se constituer à partir d'un corps élastique (1) de section circulaire, qui peut être cylindrique ou tronconique, comportant un orifice ou passage axial (10) où est montée une tige (2) rigide ou semi-rigide, ou un rivet conventionnel.

Cette tige (2) présente à l'une de ses extrémités une tête de butée (21) contre l'extrémité du corps élastique (1), alors que l'extrémité opposée est tronconique ou pointue et émerge à l'extérieur à travers l'autre extrémité dudit corps élastique (1), comptant à cette extrémité une rondelle de butée (3) rigide ou semi-rigide.
Le corps élastique (1), avec la tige-rivet (2) et la rondelle (3), forment un ensemble unique qui pénètre dans les orifices des matériaux (C₁), (C₂) à assembler; de manière à ce qu'au moyen d'un outil approprié, tel qu'une riveteuse (R), une traction soit exercée sur l'extrémité pointue (20) de la tige (2), en donnant lieu à son déplacement et, par conséquent, à la contraction du corps élastique (1) entre ladite tête de la tige et la rondelle (3), contraction qui entraîne l'expansion du corps flexible (1) et, par voie de conséquence, l'assemblage élastique des matériauxl (Ci), (C₂).

## Revendications

1. Rivet élastique universel, **caractérisé en ce que :**
a) il est consituté d'un corps élastique (1), d'une tige (2) et d'une rondelle (3) montés coaxialement ; ce corps élastique (1) étant disposé entre une tête (21) de la tige (2) et la rondelle (3)elle-même ;
b) ce corps élastique (1) comporte un bossage périmétral extérieur (11) qui, lors du rivetage, demeure disposé entre les composants (C), (C₂) à river, en évitant la transmission de vibrations et de bruits entre eux.

2. Rivet élastique universel, selon la revendication 1, **caractérisé en ce que** la tige (2) est rigide ou semi-rigide.

3. Rivet élastique universel, selon la revendication 1, **caractérisé en ce que** la tige (2) est un clou ou une fiche métallique.
